# EUROPÄISCHE PATENTANMELDUNG

(11) **EP 2 381 269 A1**
(43) Veröffentlichungstag der Anmeldung: **26.10.2011**
(21) Anmeldenummer: 10405078.6
(22) Anmeldetag: 13.04.2010
(51) Int. Cl.: G01S 7/481, G01S 17/02, G01S 17/08, G01S 17/66, G01B 11/00, G01C 15/00

(54) **Koordinatenmessgerät mit automatischer Zielerfassung**

(71) Anmelder: Leica Geosystems AG, 9435 Heerbrugg (CH)
(72) Erfinder: Böckem, Burkhard, 5436 Würenlos (CH); Luethi, Thomas, 5000 Aarau (CH)
(74) Vertreter: Frei Patent Attorneys

(57) **Zusammenfassung**

Ein Koordinatenmessgerät weist einen um zwei Achsen automatisch drehbaren und auf ein Messhilfsmittel (5) ausrichtbaren Träger (6) auf. Am Träger (6) sind gemeinsam bewegbar angeordnet:
• eine optische Distanzmessvorrichtung (4) zur Messung der Distanz zum Messhilfsmittel (5);
• eine Lichtquelle (23, 33) zum Abstrahlen von Licht, direkt oder über optische Elemente (28, 29, 41, 63), wobei dieses Licht bei Reflexion am Messhilfsmittel (5) als Zielpunkt (25, 35) sichtbar ist;
• eine Zielerfassungseinheit (2, 3) zur Bestimmung einer Position (22, 32) als der Position der Abbildung des Zielpunktes (25, 35) auf einem Positionserfassungssensor (21, 31).

Dabei ist die Regelungseinrichtung (7) zum Ausrichten des Trägers (6) auf das Messhilfsmittel (5) durch Drehung um die mindestens zwei Achsen (61, 62) des Trägers nach Massgabe der Fein-Position (22) und der Grob-Position (32) eingerichtet; und ist die Lichtquelle (23, 33) eine superlumineszente Diode (SLED).

## Beschreibung

Die Erfindung bezieht sich auf ein Koordinatenmessgerät und ein Verfahren zum Betreiben eines Koordinatenmessgerätes gemäss dem Oberbegriff der entsprechenden unabhängigen Patentansprüche.

### STAND DER TECHNIK

Zur Messung der Position von sich bewegenden Zielpunkten werden Koordinatenmessgeräte, vielfach sogenannte Lasertracker, eingesetzt. Unter dem Begriff Lasertracker werden Vorrichtungen verstanden, die mindestens einen mit einem fokussierten Laserstrahl (in der folgenden Beschreibung mit Messstrahl bezeichnet) arbeitenden Distanzmesser aufweisen. Beispielsweise mit Hilfe eines um zwei Achsen drehbaren Spiegels wird die Richtung des Messstrahles auf den Zielpunkt eingestellt und mit den Drehachsen zugeordneten Winkelgebern erfasst. Der zu vermessende Zielpunkt wird mit einem Retroreflektor (insbesondere Würfeleckenprisma oder Anordnung von drei senkrecht aufeinander stehenden Spiegeln) versehen, wobei der Retroreflektor den darauf treffenden Messstrahl des Lasertrackers zu diesem zurück reflektiert. Dabei verläuft der reflektierte Messstrahl koaxial zum emittierten Messstrahl, wenn der Messstrahl genau zentrisch auf den Reflektor trifft, und parallel versetzt dazu, wenn der Messstrahl nicht zentrisch auf den Reflektor trifft. Je nach Ausführungsform des Trackers (Absolutdistanzmesser oder Interferometer) wird aus einem Vergleich des ausgesandten und reflektierten Laserlichtes auf eine absolute Distanz zwischen Lasertracker und Zielpunkt und/oder auf eine Veränderung dieser Distanz geschlossen. Aus den von den Winkelgebern erfassten Winkeln und der vom Distanzmesser detektierten Distanz wird die Position des Reflektors bzw. des Zielpunktes relativ zum Tracker berechnet.

Ein Teil des reflektierten Messstrahls wird üblicherweise auf eine PSD (position sensitive device) geleitet. Aus der Position, in der der reflektierte Messstrahl auf die lichtempfindliche Fläche der PSD trifft, wird auf die parallele Verschiebung des reflektierten relativ zum emittierten Messstrahl geschlossen. Die dadurch ermittelten Messdaten definieren den parallelen Versatz des reflektierten Messstrahles und werden verwendet für eine Steuerung der Messstrahl-Richtung derart, dass der Messstrahl dem Zielpunkt folgt (tracking), wenn sich dieser bewegt. Das heisst, es wird durch entsprechende Veränderung der Messstrahlrichtung bzw. der Ausrichtung des den Messstrahl ausrichtenden Spiegels dafür gesorgt, dass der parallele Versatz zwischen emittiertem und reflektiertem Messstrahl verkleinert wird bzw. möglichst klein bleibt.

Eine solche PSD hat einen kleinen Öffnungswinkel, weshalb, wie beispielsweise in der WO 2007/079600 A1, EP 2 071 283 A2 oder WO 2009/046763 A1 offenbart, zusätzlich eine Zielerfassungseinheit vorgesehen sein kann. Die Zielerfassungseinheit weist ein Bilderfassungsgerät mit einem Bildsensor auf, welches mit dem Messgerät mitbewegt wird und einen grösseren Blickwinkel als die zum Tracking mit dem PSD verwendete Optik aufweist. Verliert der Tracker (oder Koordinatenmessgerät) die Ausrichtung zum Reflektor, weil beispielsweise der Reflektor zu schnell bewegt wurde, oder weil der Messstrahl durch ein Hindernis unterbrochen wurde, so kann die Zielerfassungseinheit den Reflektor erfassen und den Tracker wieder auf den Reflektor ausrichten. Dazu kann das Bilderfassungsgerät eine eigene Lichtquelle aufweisen. Es ist auch möglich, ein Gerät ohne PSD und nur mit (mindestens) einer Zielerfassungseinheit auszurüsten.

Eine solche Lichtquelle für ein Bilderfassungsgerät wird bei Geräten mit grösseren Messdistanzen. beispielsweise in Bereichen um 80 bis 160 Meter, als Laserdiode gewählt. Damit lässt sich die erforderliche Lichtstärke des reflektierten Messlichtstrahles auch über solche grossen Distanzen erreichen. Es tritt jedoch das Problem auf, dass das kohärente Licht des Lasers zu Interferenzmustern führt. Diese werden auf den Bildsensor abgebildet und verfälschen die Positionserfassung des Messlichtstrahles durch den Bildsensor (Granulationseffekt). Bekannte Mittel, um diesem Effekt entgegenzuwirken sind beispielsweise
- das von der Laserdiode abgestrahlte Licht wird vor dem Abstrahlen über eine Multimode-Fiber geleitet, welche einen Scrambler realisiert, welcher eine vorgegebene Verteilung der Lichtenergie über die Mode erzeugt.
- durch hochfrequente Modulation der Laserdiode im MHz bis GHz-Bereich wird Dekohärenz des abgestrahlten Lichtes erreicht.

### DARSTELLUNG DER ERFINDUNG

Es ist Aufgabe der Erfindung, ein Koordinatenmessgerät und ein Verfahren zum Betreiben eines Koordinatenmessgerätes der eingangs genannten Art zu schaffen, welche eine kostengünstige Realisierung und gleichwohl präzise Messungen erlauben.

Diese Aufgabe lösen ein Koordinatenmessgerät und ein Verfahren zum Betreiben eines Koordinatenmessgerätes mit den Merkmalen der entsprechenden unabhängigen Patentansprüche.

Das Koordinatenmessgerät weist auf: einen Träger, welcher bezüglich einer Basis um mindestens zwei Achsen drehbar ist, wobei der Träger durch Drehung um diese mindestens zwei Achsen mittels einer Regelungseinrichtung automatisch auf ein im Raum bewegbares Messhilfsmittel ausrichtbar ist, wobei zumindest jeweils eine Aus- und/oder Eintrittsoptik der folgenden Einheiten gemeinsam bewegbar auf dem Träger angeordnet sind,
- mindestens eine optische Distanzmessvorrichtung zur Messung der Distanz zu einem im Raum bewegbaren Messhilfsmittel;
- mindestens eine Lichtquelle zum Abstrahlen von Licht, direkt oder über optische Elemente, wobei dieses Licht bei Reflexion am Messhilfsmittel als Zielpunkt sichtbar ist;
- mindestens eine Zielerfassungseinheit zur Bestimmung einer Position als der Position der Abbildung des Zielpunktes auf einem Positionserfassungssensor;
- wobei die Regelungseinrichtung zum Ausrichten des Trägers auf das Messhilfsmittel durch Drehung um die mindestens zwei Achsen des Trägers nach Massgabe der Fein-Position und der Grob-Position eingerichtet ist; und
- wobei die Lichtquelle eine superlumineszente Diode (SLED) ist;

In einer bevorzugten Ausführungsform der Erfindung weist das Koordinatenmessgerät folgendes auf:
- als Lichtquelle eine erste Lichtquelle in Form einer SLED, vorzugsweise im Infrarot-Bereich, und optische Elemente zum Abstrahlen von Licht aus dieser ersten Lichtquelle als ersten Zielstrahl, wobei der Zielstrahl bei Reflexion am Messhilfsmittel als erster Zielpunkt sichtbar ist;
- eine Fein-Zielerfassungseinheit zur Bestimmung einer Fein-Position als der Position der Abbildung des ersten Zielpunktes auf einem ersten Positionserfassungssensor, wobei die Fein-Zielerfassungseinheit und die Distanzmessvorrichtung eine gemeinsame Austrittsoptik aufweisen;

In einer weiteren bevorzugten Ausführungsform der Erfindung weist das Koordinatenmessgerät zusätzlich oder alternativ folgendes auf:
- als Lichtquelle eine zweite Lichtquelle in Form einer SLED, welche Licht vorzugsweise zumindest im Infrarot-Bereich abstrahlt, wobei dieses Licht bei Reflexion am Messhilfsmittel als zweiter Zielpunkt sichtbar ist;
- eine Grob-Zielerfassungseinheit zur Bestimmung einer Grob-Position als der Position der Abbildung des zweiten Zielpunktes auf einem zweiten Positionserfassungssensor.

Die Lichtquelle der Fein-Zielerfassungseinheit und/oder die Lichtquelle der Grob-Zielerfassungseinheit ist also eine superlumineszente Diode (SLD oder SLED). Eine solche gibt nicht kohärentes Licht in einem relativ (im Vergleich zu einem Laser) breiten Frequenzband ab. Vorzugsweise beträgt die Breite (3dB) des Frequenzbandes zwischen 3 nm und 50 nm, insbesondere zwischen 5 nm 35 nm, und insbesondere rund 20nm.

Die Erfindung steht mit der Verwendung einer breitbandigen Quelle im Gegensatz zu üblichen Konstruktionen zur Beleuchtung eines Zielerfassungsgerätes, bei welchen gezielt Laser-Lichtquellen verwendet werden, um hohe Leistungen erzielen. Es zeigt sich, dass die Konstruktion der Beleuchtung markant vereinfacht wird: bisher verwendete Mittel zum Erzeugen einer Dekohärenz des Laserlichtes entfallen. Obwohl SLED's nicht mit derart hohen Lichtleistungen wie Laserdioden betrieben werden können, ist ein Betrieb mit Messdistanzen von beispielsweise bis zu 160 Metern möglich. Obschon SLED's um ein Vielfaches kostspieliger als Laserdioden sind (beispielsweise das Vierzigfache), so lohnt sich insgesamt der Einsatz.

Zudem hat sich überraschenderweise gezeigt, dass bei der Verwendung von SLED's, obschon weniger Lichtenergie als bei einem Laser zur Verfügung steht, eine höhere Messgenauigkeit erreicht werden kann. Grund dafür ist zum einen die geringere Granulation im Lichtpunkt, zum Anderen auch, dass nicht so wie bei Lasern temperaturabhängige Veränderungen oder Sprünge im Granulationsmuster auftreten.

Ein Vorteil gegenüber LED-Lichtquellen - abgesehen davon, dass diese von der Leistung her für höhere Distanzen grundsätzlich nicht in Frage kommen - ist, dass die Abstrahlcharakteristik von SLEDs ähnlich jener von Laserdioden ist, und somit dieselben Eintrittselemente in die Optik des Messgerätes wie bei Laserdioden verwendbar sind.

Die Frequenz der SLED Lichtquelle kann im wesentlichen - koordiniert mit der spektralen Empfindlichkeit des zugeordneten Bildsensors - beliebig gewählt sein, so dass verschiedene Typen von superlumineszenten Diode verwendbar sind (z.B. mit 650, 750, 795, 800, 830, 840, 850, 905, 1270, 1300, 1400, 1480 oder 1550 nm Wellenlänge). Vorzugsweise wird die SLED mittels eines Kühlelementes, beispielsweise beruhend auf dem Peltier-Prinzip, gekühlt.

Bei Verwendung einer SLED in der Grob-Zielerfassungseinheit ist die SLED beispielsweise an einer Fronseite des Trägers angeordnet und strahlt ihr Licht über eine Abstrahloptik ab. Diese weitet das Licht auf oder kollimiert es.

Die Regelungseinrichtung kann die Fein-Position und die Grob-Position alternativ berücksichtigen, indem beispielsweise bei Annäherung an den Zielpunkt von der Regelung anhand der Grob-Position auf die Fein-Position umgeschaltet wird. Es kann aber auch eine Regelung vorliegen, welche gleichzeitig zunächst beide Werte verarbeitet und dabei nur einen oder beide Werte auswählt und zur Regelung verwendet.

Durch die Anordnung der Aus- und/oder Eintrittsoptik aller Einheiten wird eine kompakte Einheit geschaffen, welche eine Vielzahl von Funktionen realisieren kann, und gleichwohl einen einfachen mechanischen Aufbau aufweist (nur zwei angetriebene Achsen). Alle Einheiten werden miteinander auf das Messhilfsmittel oder Ziel ausgerichtet. Mit den beiden Zielerfassungseinheiten können noch nicht erfasste Messhilfsmittel in einem grösseren Bereich detektiert, angefahren und verfolgt werden.

Vorzugsweise verläuft die optische Achse der Fein-Zielerfassungseinheit ausserhalb des Koordinatenmessgerätes koaxial zur optischen Achse der Distanzmessvorrichtung auf einer gemeinsamen Messachse. Dies setzt voraus, dass die Fein-Zielerfassungseinheit und die Distanzmessvorrichtung eine gemeinsame Austrittsoptik aufweisen. Eine gemeinsame Austrittsoptik (oder Eintrittsoptik) zweier Strahlengänge bedeutet, dass die beiden Strahlengänge durch dasselbe optische Element, wie eine Linse oder eine Scheibe, aus dem Gerät in die Umgebung des Gerätes austreten oder aus der Umgebung des Gerätes in das Gerät eintreten. In der Regel sind dabei die Strahlengänge zumindest annähernd koaxial.

In einer anderen bevorzugten Ausführungsform der Erfindung verlaufen die optischen Achsen der Fein-Zielerfassungseinheit und der Grob-Zielerfassungseinheit ausserhalb des Trägers nicht koaxial. Somit verlaufen dann die optischen Achsen entweder durch dieselbe Austrittsoptik, aber nicht koaxial, oder sie verlaufen durch separate Austrittsoptiken.

Typischerweise weist die Fein-Zielerfassungseinheit einen Öffnungswinkel oder Blickwinkel von weniger als 1 ° oder weniger als 2° oder weniger als 3° auf. Vorzugsweise weist die Grob-Zielerfassungseinheit einen Öffnungswinkel von mehr als 3° oder mehr als 10° oder mehr als 15° und vorzugsweise bis zu rund 30° (d.h. ±15°) auf.

In einer bevorzugten Ausführungsform der Erfindung sind die Fein-Zielerfassungseinheit und die Grob-Zielerfassungseinheit in voneinander getrennten Bereichen des Infrarot-Spektrums empfindlich (also jeweils entweder der entsprechende Sensor oder die Kombination des Sensors mit einem Filter). Dabei ist die Fein-Zielerfassungseinheit auf das Licht der Infrarot-Lichtquelle und die Grob-Zielerfassungseinheit auf das Licht der zweiten Lichtquelle empfindlich. Somit nimmt also die Fein-Zielerfassungseinheit das Licht der zweiten Lichtquelle nicht wahr, und nimmt die Grob-Zielerfassungseinheit das Licht der Infrarot-Lichtquelle nicht wahr.

Vorzugsweise befinden sich alle optischen und elektrischen Elemente der verschiedenen Einheiten auf dem Träger. Es ist aber auch möglich, dass einzelne Elemente einer oder mehrere Einheiten sich auf einer Basis oder in einer Zwischeneinheit befinden, und mit faseroptischen Leitern mit dem Träger verbunden sind. Solche Elemente sind beispielsweise Laserquellen oder Strahlteiler und Detektoren.

Vorzugsweise liegt in einer weiteren Ausführungsform der Erfindung eine zumindest im sichtbaren Bereich empfindliche Übersichtskamera zur Groblokalisierung des Messhilfsmittels anhand von Licht im sichtbaren Bereich vor. Diese weist vorzugsweise einen grösseren Sichtwinkel als die Grob-Zielerfassungseinheit auf. Damit ist es möglich, ein dreistufiges Verfahren zum Lokalisieren und Verfolgen des Messhilfsmittels zu realisieren, indem das Messhilfsmittel zuerst durch die Übersichtskamera gesucht, dann der Träger auf das Messhilfsmittel ausgerichtet wird, und dann das Messhilfsmittel mit der Grob-Zielerfassungseinheit und anschliessend mit der Fein-Zielerfassungseinheit angefahren wird.

Im Verfahren zum Betreiben des Koordinatenmessgerätes wird der Träger durch Drehung um die mindestens zwei Achsen des Trägers nach Massgabe der Fein-Position, der Grob-Position und optional auch von Messwerten der Übersichtskamera auf das Messhilfsmittel ausgerichtet.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: wesentliche Komponenten und den Strahlengang in einem Koordinatenmessgerät gemäss der Erfindung; und
- Figur 2: einen äusseren Aufbau eines Koordinatenmessgerätes.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

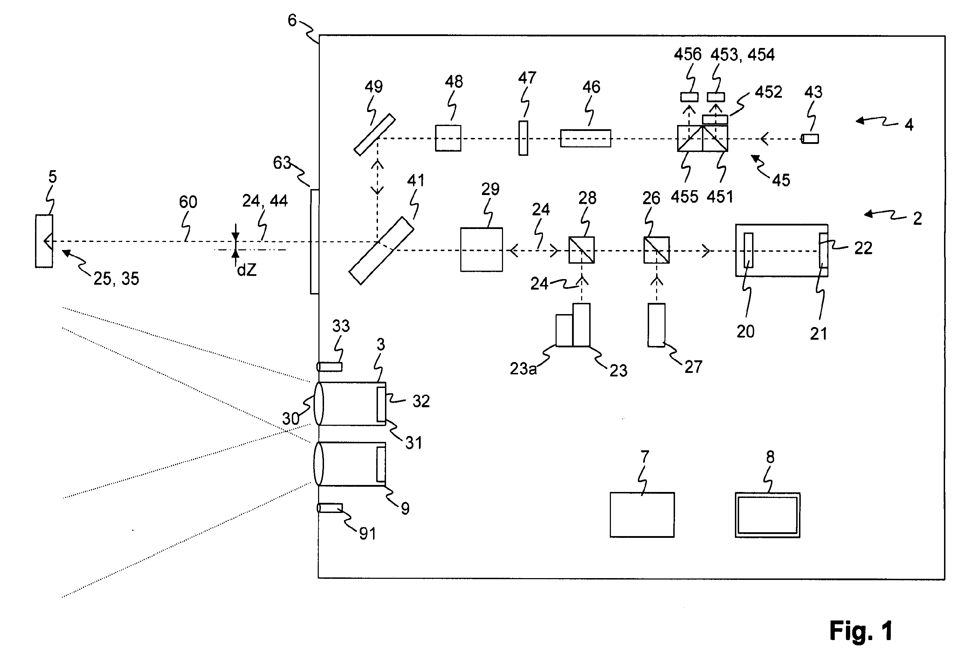

**Figur 1** zeigt schematisch den Strahlengang in einem Koordinatenmessgerät 1 in einer bevorzugten Ausführungsform der Erfindung. Die wesentlichen Elemente des Koordinatenmessgerätes 1 sind in oder auf einem Träger 6, vorzugsweise in einem gemeinsamen Gehäuse angeordnet. Eine Fein-Zielerfassungseinheit 2 erzeugt einen ersten Zielstrahl, vorzugsweise einen Infrarot-Zielstrahl 24, und eine Distanzmessvorrichtung 4 erzeugt einen Messlichtstrahl 44. Die beiden Strahlen treten durch eine gemeinsame Austrittsoptik 63 aus und verlaufen vorzugsweise koaxial entlang einer Messachse 60. Auf dem Träger sind ferner noch eine Grob-Zielerfassungseinheit 3 mit einer zweiten Lichtquelle 33, und eine Übersichtskamera 9 angeordnet. Eine Regelung und Steuerung 7 erfasst und verarbeitet die Messwerte verschiedener Sensoren und steuert Achslagemotoren zur Ausrichtung des Trägers 6. Eine Anzeigevorrichtung 8 zeigt Informationen über Messungen und den Gerätezustand und kann auch Bilder von einem der vorhanden Bildsensoren, insbesondere der Übersichtskamera 9, anzeigen.

In einem Messmodus oder Trackingmodus ist das Koordinatenmessgerät 1 respektive der Träger 6 auf ein Messhilfsmittel 5, beispielsweise einen Retroreflektor wie ein Tripelspiegel oder ein Würfeleckenprisma ausgerichtet. Die beiden Strahlen werden daran reflektiert und als Infrarot-Zielpunkt oder erster Zielpunkt 25 für das Koordinatenmessgerät 1 respektive als zweiter Zielpunkt 35 für die Distanzmessvorrichtung 4 sichtbar. Der zweite Zielpunkt 35 ist geometrisch und vom Messgerät 1 aus gesehen zumindest annähernd oder auch exakt am gleichen Ort im Raum wie der erste Zielpunkt 25 sichtbar. Konzeptionell und vom Wellenlängenbereich her werden die beiden Punkte 25, 35 aber als voneinander verschieden betrachtet.

Die Distanzmessvorrichtung 4 ist im gezeigten Beispiel ein Absolutdistanzmessgerät, kann aber auch ein Interferometer, oder eine Kombination von beiden sein. Darin strahlt eine Messlichtquelle 43 den Messlichtstrahl 44 ab. Dieser verläuft durch einen ersten Strahlteiler 451 zum Aufteilen des abgestrahlten Lichtes und einen zweiten Strahlteiler 455 zum Ablenken des rückkehrenden Lichtes. Die beiden Strahlteiler 451, 455 sind Teil einer Sensoreinheit 45. Der abgelenkte Teil des abgestrahlten Lichtes wird mittels einer Strahlaufweitung 452 aufgeweitet und auf zwei Intensitätssensoren 453, 454 geführt. Der eine dieser Intensitätssensoren 453 wird in bekannter Weise zur Amplitudenregelung der Messlichtquelle 43 verwendet, der andere 454 als zusätzliches Sicherungselement zum Detektieren einer unzulässig hohen Intensität.

Das vom zweiten Strahlteiler 455 abgelenkte rückkehrende Licht wird auf einen Detektor 456 geleitet. Die dort detektierte Intensität wird in bekannter Weise zur Bestimmung der Absolutdistanz, beispielsweise nach dem Fizeau-Prinzip, verwendet. Dazu verlaufen abgehendes und rückkehrendes Messlicht 44 durch einen elektrooptischen Modulator 46, eine Viertelwellenplatte 47, eine Strahlaufweitung 48, einen Umlenkspiegel 49 und einen Strahlteiler 41, welche den Messlichtstrahl 44 mit dem Infrarot-Zielstrahl 24 der Fein-Zielerfassungseinheit 2 kombiniert respektive diese auf dem Rückweg wieder trennt.

Die Fein-Zielerfassungseinheit 2 weist eine Infrarot-Lichtquelle 23 auf, welche den ersten Zielstrahl, vorzugsweise also den Infrarot-Zielstrahl 24 erzeugt. Vorzugsweise ist die Infrarot-Lichtquelle 23 eine superlumineszente Diode (SLED). Zur Kühlung derselben kann ein Kühlelement 23a, beispielsweise ein Peltier-Kühlelement, angeordnet sein. Der Infrarot-Zielstrahl 24 wird über eine zweite Einkopplung 28 eingekoppelt, und gelangt über eine optionale weitere Strahlaufweitung 29 und den Strahlteiler 41 auf die Messachse 60. Das von der Infrarot-Lichtquelle 23 abgestrahlte Infrarot-Licht ist dadurch als Zielstrahl 24 in den gemeinsamen Strahlengang der Distanzmessungsvorrichtung 4 und der Fein-Zielerfassungseinheit 2 eingekoppelt. In der zweiten Einkopplung 28 wird das rückkehrende Licht entsprechend dem Infrarot-Zielpunkt 25 wieder ausgekoppelt und gelangt über eine erste Einkopplung 26 und einem ersten Bandpassfilter 20 auf den ersten Positionserfassungssensor 21. Dort wird die Fein-Position 22 des Abbildes des Infrarot-Zielpunkt 25 auf dem ersten Positionserfassungssensor 21 erzeugt.

In der ersten Einkopplung 26 wird optional noch Licht aus einer Pointer-Lichtquelle 27 eingekoppelt und gelangt als Strahl in gemeinsamen Strahlengang der Distanzmessungsvorrichtung 4 und der Fein-Zielerfassungseinheit 2. Dieses Licht der Pointer-Lichtquelle 27 ist im sichtbaren Bereich, so dass die Messachse 60 beim Auftreffen auf ein Objekt auch für einen Bediener sichtbar wird. Als sichtbarer Bereich werden dabei Wellenlängen von ca. 380-750 nm betrachtet. Der Übergang zum IR-Bereich liegt zwischen 700 nm und 800 nm.

Die Grob-Zielerfassungseinheit 3 weist einen zweiten Positionserfassungssensor 31 auf. Licht von der zweiten Lichtquelle 33, welche eine einzige oder mehreren Einzel-Lichtquellen aufweisen kann, wird mit einem relativ grossen Abstrahlwinkel abgestrahlt. Vorzugsweise ist die zweite Lichtquelle 33 eine superlumineszente Diode (SLED). Der Abstrahlwinkel, nach einer Abstrahloptik 30 der zweiten Lichtquelle 33, ist etwas grösser als der Sichtwinkelbereich der Grob-Zielerfassungseinheit 3, welcher mehr als 3° oder mehr als 10° oder mehr als 15° oder bis zu rund 30° (d.h. ±15°) beträgt. Dadurch ist das Messhilfsmittel 5 für die Grob-Zielerfassungseinheit 3 auch sichtbar, wenn es in der Fein-Zielerfassungseinheit 2 nicht erfasst ist. Die Reflektion des Lichtes der zweiten Lichtquelle 33 wird als Grob-Position 32 auf einem zweiten Positionserfassungssensor 31 der Grob-Zielerfassungseinheit 3 sichtbar und messbar. Anhand dieser Messung wird der Träger 6 auf das Messhilfsmittel 5 ausgerichtet, bis die Fein-Zielerfassungseinheit 2 den eigenen Infrarot-Zielstrahl 24 detektiert. Anschliessend wird die Fein-Position 22 verwendet, um das Messhilfsmittel 5 zu verfolgen ("Tracking").

Wenn das Messhilfsmittel 5 mit beispielsweise einem Tripelspiegel das empfangene Licht exakt zurückreflektiert, muss die zweite Lichtquelle 33 nahe an der Eintrittsoptik der Grob-Zielerfassungseinheit 3 angeordnet sein.

Um gegenseitige Störungen von Fein-Zielerfassungseinheit 2 und Grob-Zielerfassungseinheit 3 zu vermeiden, arbeiten diese vorzugsweise in unterschiedlichen Wellenlängenbereichen des Infrarotspektrums. Beispielsweise weist dabei die Fein-Zielerfassungseinheit 2 ein erstes Bandpassfilter 20 mit einem ersten Durchlassbereich aufweist, und die Grob-Zielerfassungseinheit 3 ein zweites Bandpassfilter 30 mit einem zweiten Durchlassbereich aufweist, wobei sich die beiden Durchlassbereiche nicht überschneiden. Beispielsweise sind die beiden Wellenlängenbereiche 890-920 nm für die Fein-Zielerfassungseinheit 2 und 835-865 nm für die Grob-Zielerfassungseinheit 3. Zudem filtert das erste Bandpassfilter 20 Messlicht der Distanzmessvorrichtung 4 aus (aus der Messlichtquelle 43), welches durch den Strahlteiler 41 zur Fein-Zielerfassungseinheit 2 gelangt und diese stören könnte.

Die zweite Lichtquelle 33 kann, neben dem Licht im IR-Bereich, auch noch Licht im sichtbaren Bereich abstrahlen und dadurch auch als Beleuchtung für die Übersichtskamera 9 dienen. Die Übersichtskamera 9 kann auch eine eigene Beleuchtung 91 zum Abstrahlen von Licht zumindest im sichtbaren Bereich aufweisen.

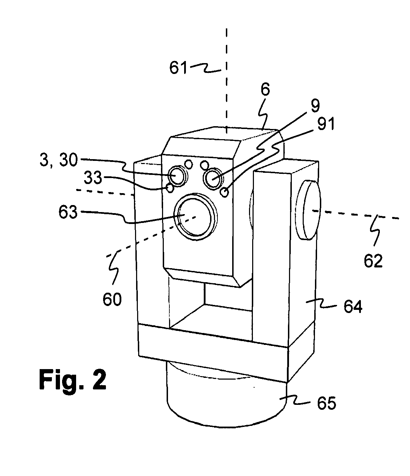

**Figur 2** zeigt schematisch den äusseren Aufbau eines Koordinatenmessgerätes 1 mit den bereits beschriebenen Elementen Austrittsoptik 63, Grob-Zielerfassungseinheit 3 mit hier zwei zweiten Lichtquellen 33 an zwei Seiten der Eintrittsoptik der Grob-Zielerfassungseinheit 3, sowie der Übersichtskamera 9 mit ihrer Beleuchtung 91, hier ebenfalls mit zwei einzelnen Lichtquellen an zwei Seiten der Eintrittsoptik der Übersichtskamera 9. Ferner sind gezeigt: die Messachse 60, eine Kippachse 62, um welche der Träger 6 bezüglich eines Zwischenträgers 64 neigbar ist, und eine Schwenkachse 61, um welche der Zwischenträger 64 bezüglich einer Basis 65 drehbar ist.

### BEZUGSZEICHENLISTE

- 1: Koordinatenmessgerät
- 2: Fein-Zielerfassungseinheit
- 20: erstes Bandpassfilter
- 21: erster Positionserfassungssensor
- 22: Fein-Position
- 23: Infrarot-Lichtquelle
- 23a: Peltier-Kühlelement
- 24: Infrarot-Zielstrahl
- 25: Infrarot-Zielpunkt
- 26: erste Einkopplung
- 27: Pointer-Lichtquelle
- 28: zweite Einkopplung
- 29: Strahlaufweitung
- 3: Grob-Zielerfassungseinheit
- 30: zweites Bandpassfilter, Abstrahloptik
- 31: zweiter Positionserfassungssensor
- 32: Grob-Position
- 33: zweite Lichtquelle
- 35: zweiter Zielpunkt
- 4: Distanzmessvorrichtung
- 41: Strahlteiler, halbdurchlässiger Spiegel
- 43: Messlichtquelle
- 44: Messlichtstrahl
- 45: Sensoreinheit
- 46: elektrooptischer Modulator
- 47: Viertelwellenplatte
- 48: Strahlaufweitung
- 49: Umlenkspiegel
- 5: Messhilfsmittel
- 6: Träger
- 60: Messachse
- 61: Schwenkachse
- 62: Kippachse
- 63: Austrittsoptik, Deckscheibe
- 64: Zwischenträger
- 65: Basis
- 7: Regelung, Steuerung
- 8: Anzeigevorrichtung
- 9: Übersichtskamera
- 91: Beleuchtung für Übersichtskamera

## Patentansprüche

1. Koordinatenmessgerät (1), aufweisend
einen Träger (6), welcher bezüglich einer Basis um mindestens zwei Achsen (61, 62) drehbar ist, wobei der Träger (6) durch Drehung um diese mindestens zwei Achsen (61, 62) mittels einer Regelungseinrichtung (7) automatisch auf ein im Raum bewegbares Messhilfsmittel (5) ausrichtbar ist,
wobei zumindest jeweils eine Aus- und/oder Eintrittsoptik der folgenden Einheiten gemeinsam bewegbar auf dem Träger (6) angeordnet sind,
• mindestens eine optische Distanzmessvorrichtung (4) zur Messung der Distanz zu einem im Raum bewegbaren Messhilfsmittel (5);
• mindestens eine Lichtquelle (23, 33) zum Abstrahlen von Licht, direkt oder über optische Elemente (28, 29, 41, 63), wobei dieses Licht bei Reflexion am Messhilfsmittel (5) als Zielpunkt (25, 35) sichtbar ist;
• mindestens eine Zielerfassungseinheit (2, 3) zur Bestimmung einer Position (22, 32) als der Position der Abbildung des Zielpunktes (25, 35) auf einem Positionserfassungssensor (21, 31);
• wobei die Regelungseinrichtung (7) zum Ausrichten des Trägers (6) auf das Messhilfsmittel (5) durch Drehung um die mindestens zwei Achsen (61, 62) des Trägers nach Massgabe der Fein-Position (22) und der Grob-Position (32) eingerichtet ist; und
• wobei die Lichtquelle (23, 33) eine superlumineszente Diode (SLED) ist.

2. Koordinatenmessgerät (1) gemäss Anspruch 1, aufweisend
• als Lichtquelle eine erste Lichtquelle (23) in Form einer SLED, vorzugsweise im Infrarot-Bereich, und optische Elemente (28, 29, 41, 63) zum Abstrahlen von Licht aus dieser ersten Lichtquelle (23) als ersten Zielstrahl (24), wobei der Zielstrahl (24) bei Reflexion am Messhilfsmittel (5) als erster Zielpunkt (25) sichtbar ist;
• eine Fein-Zielerfassungseinheit (2) zur Bestimmung einer Fein-Position (22) als der Position der Abbildung des ersten Zielpunktes (25) auf einem ersten Positionserfassungssensor (21), wobei die Fein-Zielerfassungseinheit (2) und die Distanzmessvorrichtung (4) eine gemeinsame Austrittsoptik (63) aufweisen.

3. Koordinatenmessgerät (1) gemäss Anspruch 1 oder 2, aufweisend
• als Lichtquelle eine zweite Lichtquelle (33) in Form einer SLED, welche Licht vorzugsweise zumindest im Infrarot-Bereich abstrahlt, wobei dieses Licht bei Reflexion am Messhilfsmittel (5) als zweiter Zielpunkt (35) sichtbar ist;
• eine Grob-Zielerfassungseinheit (3) zur Bestimmung einer Grob-Position (32) als der Position der Abbildung des zweiten Zielpunktes (35) auf einem zweiten Positionserfassungssensor (31).

4. Koordinatenmessgerät (1) gemäss Anspruch 3, wobei die Grob-Zielerfassungseinheit (3) nur auf Licht im Infrarotbereich empfindlich ist;

5. Koordinatenmessgerät (1) gemäss einem der bisherigen Ansprüche, wobei die optische Distanzmessvorrichtung (4) ein Absolutdistanzmessgerät oder ein Interferometer ist, oder eine Kombination von beiden.

6. Koordinatenmessgerät (1) gemäss einem der Ansprüche 2 bis 5, wobei das von der Infrarot-Lichtquelle (23) abgestrahlte Licht als Zielstrahl (24) in den gemeinsamen Strahlengang der Distanzmessungsvorrichtung (4) und der Fein-Zielerfassungseinheit (2) eingekoppelt ist.

7. Koordinatenmessgerät (1) gemäss Anspruch 6, wobei eine optische Achse der Fein-Zielerfassungseinheit (2) ausserhalb des Koordinatenmessgerätes (1) koaxial zur optischen Achse der Distanzmessvorrichtung (4) auf einer gemeinsamen Messachse (60) verläuft.

8. Koordinatenmessgerät (1) gemäss Anspruch 6, wobei die optischen Achsen der Fein-Zielerfassungseinheit (2) und der Grob-Zielerfassungseinheit (3) ausserhalb des Trägers (6) nicht koaxial verlaufen.

9. Koordinatenmessgerät (1) gemäss einem der bisherigen Ansprüche, wobei die Fein-Zielerfassungseinheit (2) einen Öffnungswinkel von weniger als 1° oder weniger als 2° oder weniger als 3° aufweist.

10. Koordinatenmessgerät (1) gemäss einem der bisherigen Ansprüche, wobei die Grob-Zielerfassungseinheit (3) einen Öffnungswinkel von mehr als 3° oder mehr als 10° oder mehr als 15° aufweist.

11. Koordinatenmessgerät (1) gemäss einem der bisherigen Ansprüche, wobei die Fein-Zielerfassungseinheit (2) und die Grob-Zielerfassungseinheit (3) in voneinander getrennten Bereichen des Infrarot-Spektrums empfindlich sind, und die Fein-Zielerfassungseinheit (2) auf das Licht der Infrarot-Lichtquelle (23) und die Grob-Zielerfassungseinheit (3) auf das Licht der zweiten Lichtquelle (33) empfindlich ist.

12. Koordinatenmessgerät (1) gemäss Anspruch 11, wobei die Fein-Zielerfassungseinheit (2) ein erstes Bandpassfilter (20) mit einem ersten Durchlassbereich aufweist, die Grob-Zielerfassungseinheit (3) ein zweites Bandpassfilter (30) mit einem zweiten Durchlassbereich aufweist, und sich die beiden Durchlassbereiche nicht überschneiden, und das erste Bandpassfilter (20) Messlicht der Distanzmessvorrichtung (4) ausfiltert.
